# EUROPEAN PATENT APPLICATION

(11) **EP 4 757 333 A1**
(43) Date of publication of application: **10.06.2026**
(21) Application number: 24863077.4
(22) Date of filing: 21.08.2024
(51) Int. Cl.: H04N 23/63, H04N 23/62, H04N 23/73, H04N 23/71, H04N 23/86, H04N 5/77, G06T 5/40, H04N 23/951, H04N 23/57, G06T 5/92

(54) **ELECTRONIC DEVICE INCLUDING CAMERA, OPERATING METHOD THEREOF, AND RECORDING MEDIUM**

(30) Priority: 05.09.2023 KR 20230117781; 29.12.2023 KR 20230196023
(71) Applicant: Samsung Electronics Co., Ltd., Suwon-si, Gyeonggi-do 16677 (KR)
(72) Inventor: RYU, Janghee, Suwon-si Gyeonggi-do 16677 (KR); KIM, Dongwoo, Suwon-si Gyeonggi-do 16677 (KR); KIM, Bosung, Suwon-si Gyeonggi-do 16677 (KR); KIM, Hyunsoo, Suwon-si Gyeonggi-do 16677 (KR); PARK, Kyoungkeun, Suwon-si Gyeonggi-do 16677 (KR); AHN, Byeongdoo, Suwon-si Gyeonggi-do 16677 (KR); YEOM, Donghyun, Suwon-si Gyeonggi-do 16677 (KR); JUNG, Bongsoo, Suwon-si Gyeonggi-do 16677 (KR)
(74) Representative: HGF
(86) International application number: PCT/KR2024/012420
(87) International publication number: WO 2025/053496

(57) **Abstract**

According to an embodiment, an electronic device comprises: a display; a memory; a camera; and a processor, wherein the memory may store instructions which, when executed by the processor, cause the electronic device to: display, on the display, a preview image obtained by photographing, through the camera, a first object on the basis of first setting values of the camera; determine second setting values of the camera in which at least some of the first setting values are different by analyzing the preview image; determine the type or the number of at least one additional image to photograph the first object on the basis of the second setting values; obtain, through the camera, an image by photographing the first object on the basis of the first setting values and the at least one additional image by photographing the first object on the basis of the second setting values and the type or the number; and store, in the memory, the at least one additional image or information about the second setting values as metadata of the image. Other various embodiments are possible.

## Description

### [Technical Field]

Embodiments of the disclosure relate to an electronic device including a camera, a method of operating the same, and a recording medium.

### [Background Art]

The term "electronic device" may refer to a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and ultra-high-speed, high-capacity wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, or a scheduling or e-wallet function.

With the development of digital camera manufacturing technology, an electronic device equipped with a compact and lightweight camera module has been used. Users may take advantage of various functionalities of an electronic device with camera modules, such as photographing, video recording, video call, augmented reality (AR), etc., in a convenient manner, while carrying it all the time.

### [Detailed Description of the Invention]

### [Technical Problem]

According to an embodiment, an electronic device may include a display, memory, a camera, and a processor.

According to an embodiment, the memory may store instructions that, when executed by the processor, cause the electronic device to display, on the display, a preview image of a first object captured through the camera based on first setting values of the camera.

According to an embodiment, the memory may store instructions that, when executed by the processor, cause the electronic device to determine second setting values of the camera at least part of which is different from the first setting values, by analyzing the preview image.

According to an embodiment, the memory may store instructions that, when executed by the processor, cause the electronic device to determine, based on the second setting values, a type or number of at least one additional image to capture the first object.

According to an embodiment, the memory may store instructions that, when executed by the processor, cause the electronic device to obtain, through the camera, an image of the first object captured based on the first setting values and the at least one additional image of the first object captured based on the second setting values and the type or the number.

According to an embodiment, the memory may store instructions that, when executed by the processor, cause the electronic device to store, in the memory, information about the at least one additional image and the second setting values as metadata of the image.

According to an embodiment, a method of operating an electronic device may include displaying, on a display included in the electronic device, a preview image of a first object captured through a camera included in the electronic device based on first setting values of the camera.

According to an embodiment, the method of operating the electronic device may include determining second setting values of the camera at least part of which is different from the first setting values, by analyzing the preview image.

According to an embodiment, the method of operating the electronic device may include determining, based on the second setting values, a type or number of at least one additional image to capture the first object.

According to an embodiment, the method of operating the electronic device may include obtaining, through the camera, a first image of the first object captured based on the first setting values and the at least one additional image of the first object captured based on the second setting values and the type or the number.

According to an embodiment, the method of operating the electronic device may include storing, in the memory included in the electronic device, information about the at least one additional image or the second setting values as metadata of the image.

According to an embodiment, in a storage medium storing computer-readable instructions, the instructions, when executed by a processor of an electronic device, cause the electronic device to perform at least one operation. The at least one operation may include displaying, on a display included in the electronic device, a preview image of a first object captured through a camera included in the electronic device based on first setting values of the camera.

According to an embodiment, in a storage medium storing computer-readable instructions, the instructions, when executed by a processor of an electronic device, cause the electronic device to perform at least one operation. The at least one operation may include determining second setting values of the camera at least part of which is different from the first setting values, by analyzing the preview image.

According to an embodiment, in a storage medium storing computer-readable instructions, the instructions, when executed by a processor of an electronic device, cause the electronic device to perform at least one operation. The at least one operation may include determining, based on the second setting values, a number or type of at least one additional image to capture the first object.

According to an embodiment, in a storage medium storing computer-readable instructions, the instructions, when executed by a processor of an electronic device, cause the electronic device to perform at least one operation. The at least one operation may include obtaining, through the camera, a first image of the first object captured based on the first setting values and the at least one additional image of the first object captured based on the second setting values and the type or the number.

According to an embodiment, in a storage medium storing computer-readable instructions, the instructions, when executed by a processor of an electronic device, cause the electronic device to perform at least one operation. The at least one operation may include storing, in memory included in the electronic device, the at least one additional image as metadata of the first image.

### [Brief Description of Drawings]

FIG. 1 is a view illustrating an electronic device in a network environment according to an embodiment.
FIG. 2 is a block diagram illustrating a camera module according to an embodiment.
FIG. 3A is a schematic block diagram illustrating an electronic device according to an embodiment.
FIG. 3B is a view illustrating an image signal processor included in an electronic device according to an embodiment.
FIG. 3C is a view illustrating an analysis module according to an embodiment.
FIG. 4 is a view illustrating an operation of an electronic device obtaining an additional image with enhanced brightness or saturation of at least one of a first image according to an embodiment.
FIG. 5A is a flowchart illustrating an operation of an electronic device obtaining a first image and at least one additional image according to an embodiment.
FIG. 5B is a flowchart illustrating an operation of an electronic device obtaining a first image and at least one additional image according to an embodiment.
FIG. 6 is a flowchart illustrating an operation of the electronic device obtaining at least one additional image based on a second exposure value different from a first exposure value of a preview image according to an embodiment.
FIG. 7 is a flowchart illustrating an operation of an electronic device obtaining at least one additional image based on a second color space different from a first color space of a preview image according to an embodiment.
FIG. 8 is a flowchart illustrating an operation of an electronic device obtaining at least one additional image based on a user setting value related to at least one of saturation or brightness according to user preference according to an embodiment.
FIG. 9 is a flowchart illustrating an operation of an electronic device storing information about at least one region included in a preview image as meta information of a first image according to an embodiment.
FIG. 10A is a view illustrating an operation of the electronic device obtaining at least one additional image to enhance brightness when a clipped portion is identified in a histogram representing brightness of a first image according to an embodiment.
FIG. 10B is a view illustrating an operation of the electronic device obtaining at least one additional image to enhance brightness when a clipped portion is identified in a histogram representing brightness of a first image according to an embodiment.
FIG. 10C is a view illustrating an operation of an electronic device obtaining at least one additional image to enhance brightness when a clipped portion is identified in histograms of each of a plurality of channels representing brightness of a first image according to an embodiment.
FIG. 11 is a view illustrating an operation of an electronic device obtaining at least one additional image to enhance saturation based on a second color space different from a first color space of a preview image according to an embodiment.
FIG. 12 is a view illustrating an operation of an electronic device identifying information about at least one region among a plurality of regions included in a preview image according to an embodiment.

### [Mode for Carrying out the Invention]

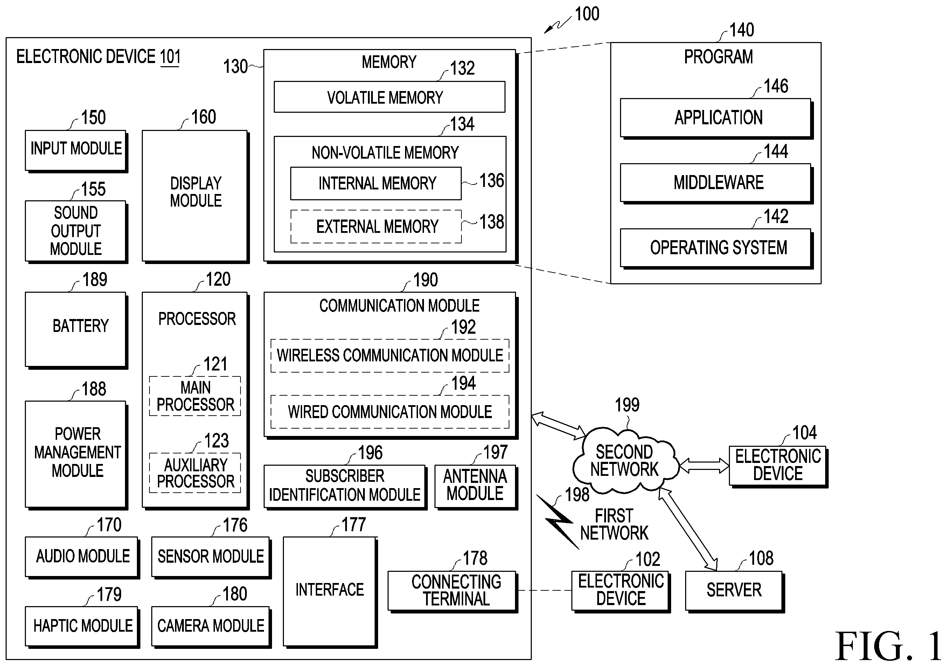

FIG. 1 is a block diagram illustrating an electronic device 101 in a network environment 100, according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

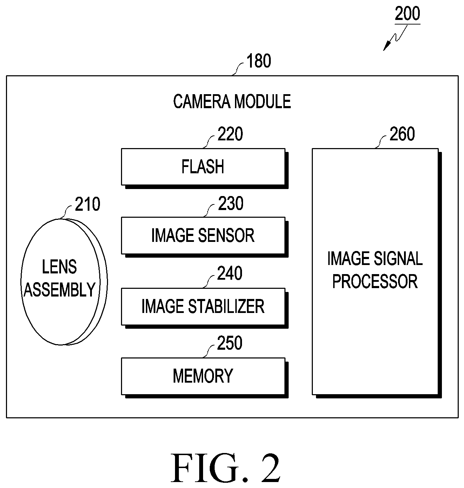

FIG. 2 is a block diagram 220 illustrating a camera module 180 according to an embodiment.

Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In this case, the camera module 180 may form, e.g., a dual-camera, a 360-degree camera, or a spherical camera. Some of the plurality of lens assemblies 210 may have the same lens attribute (e.g., field of view, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, e.g., a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This makes it possible to compensate for at least some of the negative effects of the movement on the image being taken. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

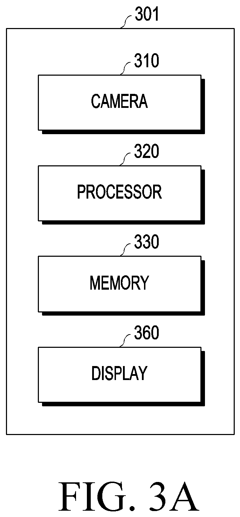

FIG. 3A is a block diagram schematically illustrating an electronic device according to an embodiment.

Referring to FIG. 3A, an electronic device 301 according to an embodiment may analyze a preview image displayed through a display 360. According to an embodiment, the operation of analyzing the preview image may include determining whether there is a portion needing compensation where brightness is darker or brighter than a reference value, in relation to brightness of a first image to be captured based on the preview image. According to an embodiment, the operation of analyzing the preview image may include determining whether there is a portion needing compensation where saturation is higher or lower than a reference value, in relation to saturation of the first image to be captured based on the preview image. For example, the electronic device 301 may determine that there is a portion needing compensation when it is identified that exposure is greater than the reference value for at least one region (e.g., a region including sky) among a plurality of regions included in the preview image. The electronic device 301 according to an embodiment may additionally obtain an additional image for enhancing saturation or brightness of the first image at the time when the first image is obtained, as a result of analyzing the preview image. According to an embodiment, the electronic device 301 may obtain the first image and the additional image at the same time. The electronic device 301 may also obtain the additional image after obtaining the first image.

According to an embodiment, the electronic device 301 may obtain the additional image as a result of development processing using a raw image. According to an embodiment, the electronic device 301 may store a raw image obtained through the camera 310 in the memory 330. According to an embodiment, the raw image may represent data not processed by an image sensor (e.g., the image sensor 230 of FIG. 2). According to an embodiment, the first setting values of the camera 310 identified at the time when the raw image is captured may be stored as metadata of the raw image. According to an embodiment, the electronic device 301 may develop and obtain the first image based on the first setting values of the camera 310 using (e.g., reading) the raw image stored in the memory 330. According to an embodiment, the electronic device 301 may develop and obtain the additional image by adjusting at least part of the first setting values using the raw image. For example, an image file including the first image and the additional image may include JPEG or JPG. A bit depth of the image file of the raw image may be greater than a bit depth (e.g., 8 bits) of the image file including the first image and the additional image.

According to an embodiment, the electronic device 301 may store the first image and the additional image as a single image file, and the additional image may be stored as metadata of the first image. In this case, the image file may be stored in the format of a general standard-dynamic-range (SDR) range such as a joint photographic experts group (JPEG) format or a JPG format.

Thereafter, the electronic device 301 according to an embodiment may display an image with enhanced brightness or saturation of the first image on the display 360 by overlaying the additional image on the first image. According to an embodiment, the electronic device 301 may render and obtain an image with enhanced brightness or saturation of the first image by compositing the first image and the additional image or by adding the additional image on the first image using the first image as a base image. Accordingly, the electronic device 301 according to an embodiment may provide a user with an effect as if an image with enhanced brightness or saturation of the first image is a high dynamic range (HDR) image.

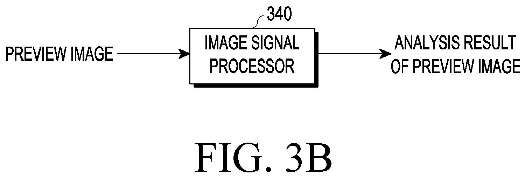

According to an embodiment, the electronic device 301 may include the camera 310 (e.g., the camera module 180 of FIG. 1), the processor 320 (e.g., the processor 120 of FIG. 1), the memory 330 (e.g., the memory 130 of FIG. 1), and the display 360 (e.g., the display module 160 of FIG. 1). According to an embodiment, the processor 220 may control the overall operation of the electronic device 201. For example, the processor 320 may be implemented identical or similar to the processor 120 of FIG. 1. For example, the processor 320 may be implemented as an application processor (AP). For example, the processor 320 may include an image signal processor (ISP) 340 (e.g., 340 of FIG. 3B, 260 of FIG. 2). According to an embodiment, the processor 320 may perform operations performed by the image signal processor 340.

According to an embodiment, the processor 320 may display a preview image of a first object captured based on first setting values of the camera 310 on the display 360 through the camera 310. For example, the first object may include a subject, a landscape, or an object.

According to an embodiment, the first setting values may include at least one of a first exposure value, a first color space, or a white balance value of the camera 310. For example, the first exposure value may include an exposure value determined based on a first shutter speed value, a first sensitivity value, and a first aperture value. For example, the first color space may include DCI-P3, Adobe RGB, sRGB, Rec. 709, or Rec. 2020. However, this is an example, and the first setting values may not be limited to the example.

According to an embodiment, the processor 320 may analyze the preview image. According to an embodiment, the processor 320 may analyze the preview image to determine second setting values of the camera 310 that are at least partially different from the first setting values. According to an embodiment, an operation of the processor 320 analyzing the preview image to determine second setting values in which the first exposure value among the first setting values is changed is described.

According to an embodiment, the processor 320 may analyze the preview image to identify the first shutter speed value, the first sensitivity value, and the first aperture value by the first exposure value of the preview image. According to an embodiment, the processor 320 may analyze the preview image to identify a histogram representing brightness of the preview image. According to an embodiment, the histogram may include a graph representing the number of pixels corresponding to brightness of an image.

According to an embodiment, the processor 320 may identify a first portion where clipping occurs in the histogram representing the brightness of the preview image. For example, the first portion may include a portion where white clipping occurs or a portion where black clipping occurs. According to an embodiment, a portion where white clipping occurs may include a portion where over exposure of the camera 310 occurs, where information about bright areas in an image has been lost. According to an embodiment, a portion where black clipping occurs may include a portion where under exposure of the camera 310 occurs, where information about dark areas in an image has been lost.

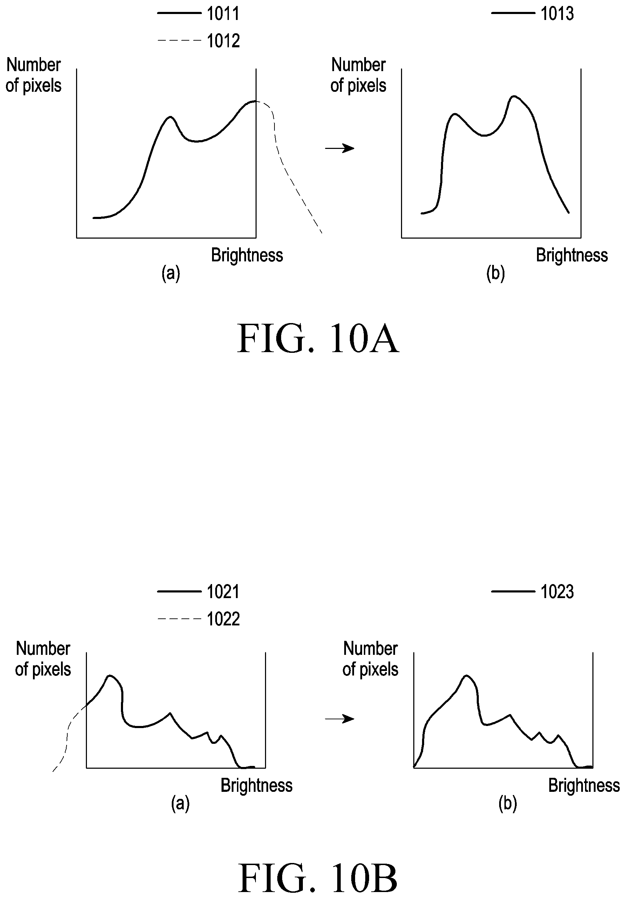

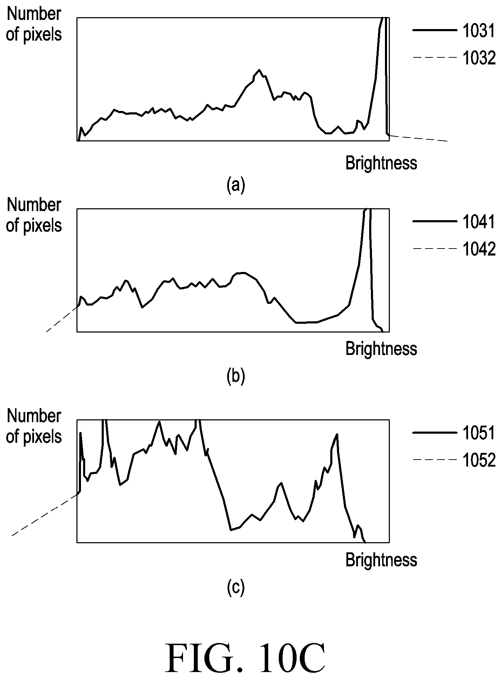

For example, the processor 320 may identify that white clipping (e.g., 1012 of FIG. 10A, 1032 of FIG. 10C) occurs in the first portion when the number of pixels corresponding to a first brightness representing the first portion of the histogram is greater than a specified first value. In other words, the processor 320 may identify that highlight portions are saturated and white clipped when determining that pixels corresponding to the first brightness are cut off in the histogram. For example, when the processor 320 identifies that white clipping (e.g., 1012 of FIG. 10A, 1032 of FIG. 10C) occurs in the first portion, the processor 320 may determine the exposure value included in the second setting values to be less than the first exposure value. For example, the specified first value may be set by a user or automatically set by the processor 320.

For example, the processor 320 may identify that black clipping (e.g., 1022 of FIG. 10B, 1042, 1052 of FIG. 10C) occurs in the first portion when the number of pixels corresponding to a second brightness less than the first brightness representing the first portion of the histogram is greater than a specified second value. In other words, the processor 320 may identify that shadow portions are saturated and black clipped when determining that pixels corresponding to the second brightness are cut off in the histogram. For example, when the processor 320 identifies that black clipping (e.g., 1022 of FIG. 10B, 1042, 1052 of FIG. 10C) occurs in the first portion, the processor 320 may determine the exposure value included in the second setting values to be greater than the first exposure value. For example, the specified second value may be set by a user or automatically set by the processor 320. The specified first value and the specified second value may be the same as or different from each other.

According to an embodiment, the histogram may include a first histogram associated with a red (R) channel of the preview image, a second histogram associated with a green (G) channel, or a third histogram associated with a blue (B) channel. According to an embodiment, the histogram may also include a fourth histogram obtained by combining the first histogram, the second histogram, and the third histogram. According to an embodiment, the processor 320 may determine an exposure degree regarding brightness for each channel by analyzing the first histogram associated with the red (R) channel, the second histogram associated with the green (G) channel, or the third histogram associated with the blue (B) channel. According to an embodiment, the processor 320 may determine the second setting value (e.g., exposure value) based on a result of analyzing the first histogram associated with the red (R) channel, the second histogram associated with the green (G) channel, or the third histogram associated with the blue (B) channel.

According to an embodiment, based on identifying the first portion, the processor 320 may determine a second exposure value different from the first exposure value so that clipping does not occur in the first portion. According to an embodiment, the second exposure value may include an exposure value adjusted from the first exposure value by changing at least one of the first shutter speed value, the first sensitivity value, or the first aperture value.

According to an embodiment, an operation of the processor 320 analyzing the preview image to determine second setting values in which the first color space among the first setting values is changed is described.

According to an embodiment, the processor 320 may analyze the preview image to identify the first color space of the preview image. According to an embodiment, a color space may include a standard specification in which colors of pixels of an image are represented. For example, the color space may be determined based on coordinate values in an xy coordinate plane system.

According to an embodiment, the processor 320 may analyze the preview image to identify a second portion having saturation lower than a specified value in the first color space. According to an embodiment, the processor 320 may identify the second portion based on color saturation of pixels of the preview image identified in the first color space. According to an embodiment, the processor 320 may identify color saturation based on positions (or coordinates) of pixels identified in the first color space.

According to an embodiment, the processor 320 may determine that the second portion having saturation lower than the specified value has been identified when color saturation is greater than a specified third value. For example, when color saturation is greater than the specified third value, the processor 320 may identify that colors included in the preview image exceed a color range that may be represented in the first color space.

According to an embodiment, based on identifying the second portion having saturation lower than the specified value in the first color space, the processor 320 may determine a second color space different from the first color space. For example, the second color space may include DCI-P3, Adobe RGB, sRGB, Rec. 709, or Rec. 2020. However, this is an example, and the color space may include various color spaces. For example, the second color space may include a color space capable of representing a wider range of colors than the first color space. According to an embodiment, the processor 320 may determine a number or type of at least one additional image to be captured based on the second setting values through the camera 310. For example, the at least one additional image may represent an image for enhancing at least one of brightness or saturation of the first image to be obtained based on the preview image based on the first setting values. The at least one additional image may include a recovery map or a y map. For example, the y map may include a grayscale image representing brightness information of the at least one additional image of the first object captured based on the second setting values.

According to an embodiment, the processor 320 may determine the second setting values based on the first setting values, and may determine the number or type of the at least one additional image based on the second setting values. According to an embodiment, the processor 320 may determine the number of changes of the second setting values from the first setting values as the number of the at least one additional image. According to an embodiment, the type of the at least one additional image may include an additional image for enhancing brightness of the first image to be captured based on the preview image or an additional image for enhancing saturation of the first image.

For example, when the processor 320 determines the second setting values where only the first color space among the first setting values is changed to the second color space, the processor 320 may determine the number of the at least one additional image as one. In this case, the at least one additional image may include an image captured based on the second color space.

For example, when the processor 320 determines the second setting values where the first color space among the first setting values is changed to the second color space and the first sensitivity value included in the first exposure value is changed to a second sensitivity value, the processor 320 may determine the number of the at least one additional image as two. In this case, the at least one additional image may include an image based on the second color space and an image based on the second sensitivity value.

According to an embodiment, the processor 320 may determine the number of the at least one additional image of the first object captured based on the second setting values as one, regardless of the number of changes of the second setting values from the first setting values. For example, when the second setting values are determined as the second exposure value and the second color space, the processor 320 may obtain one additional image based on the second exposure value and the second color space.

According to an embodiment, the processor 320 may obtain, through the camera 310, the first image of the first object captured based on the first setting values and the at least one additional image of the first object captured based on the second setting values and the number. For example, the first image may include an image based on the preview image displayed on the display 360.

According to an embodiment, the processor 320 may identify a user's setting value related to brightness or saturation according to user preference. According to an embodiment, the processor 320 may obtain the at least one additional image based on the user's setting value related to brightness or saturation. For example, the processor 320 may identify an input for user preference. The processor 320 may identify setting values of the camera 310 including at least one of an exposure value, a color space, or a white balance value corresponding to the user preference based on the input. Each of the setting values of the camera 310 for each of the exposure value, color space, and white balance value corresponding to the user preference may be pre-stored in the memory 330. For example, the processor 320 may store setting values of the camera 310 related to images obtained by the camera 310 as usage history in the memory 330. The processor 3220 may determine setting values of the camera 310 for obtaining an image based on the usage history stored in the memory 330. Accordingly, the processor 320 may determine setting values of the camera 310 to obtain an image even when there is no user input for the setting values of the camera 310 of the electronic device 301.

According to an embodiment, the processor 320 may simultaneously obtain the first image and the at least one additional image through the camera 310. According to an embodiment, the processor 320 may store an image file including the first image and the at least one additional image in the memory 330. According to an embodiment, the processor 320 may store the at least one additional image as metadata of the first image.

According to an embodiment, the processor 320 may store information about the first setting values of the camera 310 for the first image and information about the second setting values of the camera 310 for the at least one additional image as metadata of the first image.

Alternatively, according to an embodiment, the processor 320 may obtain the at least one additional image based on a raw image obtained through the camera 310. According to an embodiment, the processor 320 may store a raw image obtained through the camera 310 in the memory 330. According to an embodiment, the raw image may represent data not processed by an image sensor (e.g., the image sensor 230 of FIG. 2). According to an embodiment, the first setting values of the camera 310 identified at the time when the raw image is captured may be stored as metadata of the raw image. According to an embodiment, the processor 320 may develop and obtain the first image based on the first setting values of the camera 310 identified at the time when the raw image is captured using (e.g., reading) the raw image stored in the memory 330. According to an embodiment, the processor 320 may develop and obtain the at least one additional image based on the second setting values using the raw image. According to an embodiment, the operation of the processor 320 developing the raw image may include obtaining an image based on adjusted setting values by adjusting setting values of the camera 310 identified at the time when the raw image stored in the memory 330 was captured. According to an embodiment, after obtaining the first image and the at least one additional image, the processor 320 may delete the raw image stored in the memory 330. According to an embodiment, the processor 320 may store the at least one additional image and/or the second setting values as metadata of the first image. According to an embodiment, the processor 320 may store the first image and the at least one additional image as a single image file. For example, a single image file including the first image and the at least one additional image may include JPEG or JPG. A bit depth (e.g., 8 bits) of a single image file including the first image and the at least one additional image may be less than a bit depth of the image file of the raw image.

According to an embodiment, the processor 320 may analyze the preview image to identify that brightness of a first region among a plurality of regions included in the preview image changes from a first brightness to a second brightness at each specified period. According to an embodiment, the processor 320 may store information about the first region, information about the first brightness, information about the second brightness, information about a duration of the first brightness, and information about a duration of the second brightness as metadata of the first image.

According to an embodiment, the processor 320 may store information about an object included in the preview image as metadata of the first image. The processor 320 may analyze a scene of the preview image to obtain information about the object. Information about the object may include information about a subject (e.g., person, animal, object). For example, the processor 320 may identify that the preview image is a portrait image, a landscape image, or a food image.

According to an embodiment, the processor 320 may obtain an image in which the at least one additional image is overlaid on the first image. According to an embodiment, an image in which the at least one additional image is overlaid on the first image may include a standard-dynamic-range (SDR) image. According to an embodiment, the processor 320 may render and obtain an image with enhanced brightness or saturation of the first image by compositing the first image and the additional image or by adding the additional image on the first image using the first image as a base image.

FIG. 3B is a view illustrating an image signal processor included in an electronic device according to an embodiment.

Referring to FIG. 3B, according to an embodiment, the electronic device 301 (e.g., the electronic device 301 of FIG. 3A) may include an image signal processor (ISP) 340. According to an embodiment, the image signal processor 340 may be included in the processor 320 (e.g., the processor 320 of FIG. 3A) or may be implemented as a separate configuration (e.g., included in the camera 310 (e.g., the camera 310 of FIG. 3A) or implemented as separate hardware). The processor 320 may control the image signal processor 340.

According to an embodiment, the processor 320 may obtain a preview image of a first object captured based on first setting values through the camera 310. According to an embodiment, the processor 320 may transmit the preview image to the image signal processor 340.

According to an embodiment, the image signal processor 340 may analyze the preview image.

For example, the image signal processor 340 may determine whether there is a portion needing compensation where brightness is darker or brighter than a reference value, in relation to brightness of a first image to be captured based on the preview image. The image signal processor 340 may determine whether there is a portion needing compensation where saturation is higher or lower than a reference value, in relation to saturation of the first image to be captured based on the preview image.

For example, the image signal processor 340 may include an operation of identifying information about a capture mode of the camera 310 for the preview image. Information about the capture mode may include information about a portrait capture mode, a night capture mode, a landscape capture mode, a food capture mode, or a pet capture mode. The image signal processor 340 may identify setting values (e.g., second setting values) of the camera 310 pre-specified corresponding to the capture mode.

For example, the image signal processor 340 may identify information about an object included in the preview image. The image signal processor 340 may identify setting values (e.g., second setting values) of the camera 310 pre-specified corresponding to the object. For example, the object may include food, a person, a building, a neon sign, a landscape, sky, or a traffic light. However, this is an example and may not be limited to the examples.

According to an embodiment, the image signal processor 340 may determine second setting values of the camera 310 that are at least partially different from the first setting values based on an analysis result of the preview image. For example, the first setting values may include a first exposure value determined based on a first shutter speed value, a first sensitivity value, and a first aperture value, and a first color space. According to an embodiment, the image signal processor 340 may identify a first portion where clipping occurs in a histogram representing brightness of the preview image. According to an embodiment, based on identifying the first portion, the image signal processor 340 may determine a second exposure value different from the first exposure value so that clipping does not occur in the first portion. According to an embodiment, the second exposure value may include a value in which at least one of the first shutter speed value, the first sensitivity value, or the first aperture value is changed.

According to an embodiment, the image signal processor 340 may identify the first color space of the preview image. According to an embodiment, the image signal processor 340 may analyze the preview image to identify a second portion having saturation lower than a specified value in the first color space. According to an embodiment, the image signal processor 340 may identify the second portion based on color saturation identified in the first color space. According to an embodiment, when color saturation is greater than a specified first value, the image signal processor 340 may determine that the second portion having saturation lower than the specified value has been identified. For example, the specified first value may represent a value identified to exceed a color range that may be represented in the first color space.

According to an embodiment, based on identifying the second portion having saturation lower than the specified value in the first color space, the image signal processor 340 may determine a second color space different from the first color space. For example, the second color space may include a color space capable of representing a wider range of colors than the first color space.

According to an embodiment, the image signal processor 340 may determine a number of at least one additional image to be captured based on the second setting values through the camera 310.

According to an embodiment, the image signal processor 340 may provide information about the second setting values including information about the second exposure value and information about the second color space to the processor 320 as an analysis result of the preview image. According to an embodiment, the image signal processor 340 may provide information about the number of at least one additional image to be captured based on the second setting values to the processor 320 as an analysis result of the preview image.

According to an embodiment, the processor 320 may obtain at least one additional image through the camera 310 based on the analysis result of the preview image received from the image signal processor 340.

According to an embodiment, operations performed by the image signal processor 340 may be performed by the processor 320. According to an embodiment, operations performed by the processor 320 may also be performed by the image signal processor 340.

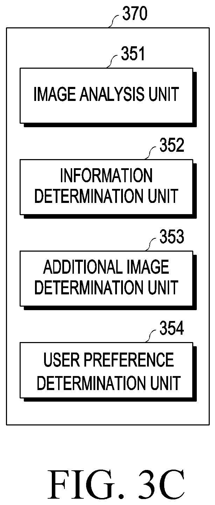

FIG. 3C is a view illustrating an analysis module according to an embodiment.

Referring to FIG. 3C, according to an embodiment, an analysis module 370 may include an image analysis unit 351, an information determination unit 352, an additional image determination unit 353, and a user preference determination unit 354.

According to an embodiment, the analysis module 370 may be stored in the memory 330 (e.g., the memory 330 of FIG. 3A). According to an embodiment, the analysis module 370 including the image analysis unit 351, the information determination unit 352, the additional image determination unit 353, and the user preference determination unit 354 may be implemented as a single configuration. According to an embodiment, the analysis module 370 may be implemented as software. According to the implementation, according to an embodiment, at least part of the analysis module 370 may be implemented as hardware. According to an embodiment, the processor 320 (e.g., the processor 320 of FIG. 3A) or the image signal processor 340 (e.g., the image signal processor 340 of FIG. 3A) may perform operations using the analysis module 370.

According to an embodiment, the image analysis unit 351 may analyze a preview image captured through the camera 310 (e.g., the camera 310 of FIG. 3A). According to an embodiment, the image analysis unit 351 may analyze a histogram representing brightness of the preview image or a color space of the preview image. For example, the image analysis unit 351 may identify whether there is a portion where clipping occurs in the histogram representing the brightness of the preview image. For example, the image analysis unit 351 may identify whether there is a portion having saturation lower than a specified value in the color space of the preview image.

According to an embodiment, the information determination unit 352 may determine setting values including an exposure value and a color space of the camera 310 based on the histogram representing the brightness of the preview image or the color space of the preview image.

According to an embodiment, the additional image determination unit 353 may determine a type and number of additional images based on information (e.g., setting values) determined by the information determination unit 352. According to an embodiment, the type of additional image may include an additional image for enhancing brightness and an additional image for enhancing saturation.

For example, the additional image for enhancing brightness may include an image obtained by adjusting a first exposure value among the first setting values to a second exposure value different from the first exposure value. For example, the additional image for enhancing saturation may include an image obtained by adjusting a first color space among the first setting values to a second color space different from the first color space.

According to an embodiment, the user preference determination unit 354 may identify setting values of the camera 310 corresponding to a user setting value related to at least one of saturation or brightness according to user preference. Each of the setting values of the camera 310 for each of the exposure value, color space, and white balance value corresponding to the user preference may be pre-stored in the memory 330.

The operations of the electronic device 301 described in the drawings may be performed by the processor 320. However, for convenience of description, operations performed by the processor 320 are described as being performed by the electronic device 301.

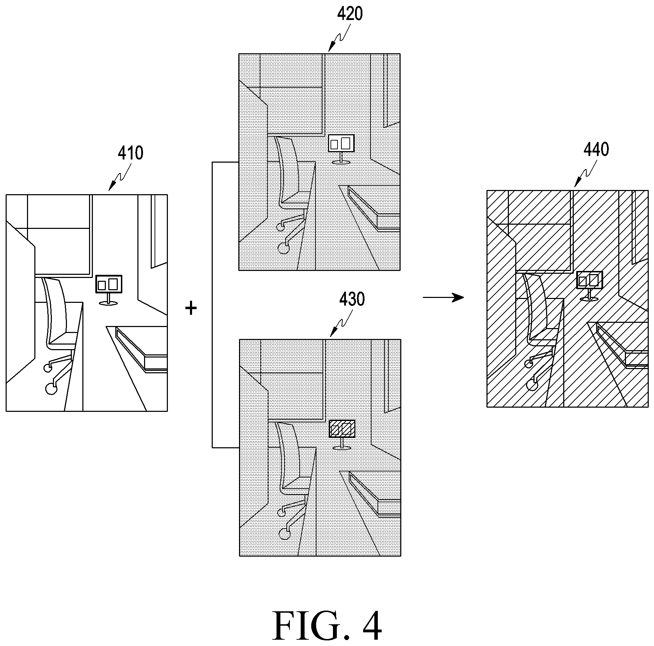

FIG. 4 is a view illustrating an operation of an electronic device obtaining an additional image with enhanced brightness or saturation of at least one of a first image according to an embodiment.

Referring to FIG. 4, according to an embodiment, the electronic device 301 (e.g., the electronic device 301 of FIG. 3A) may identify a preview image of a first object captured through the camera 310 (e.g., the camera 310 of FIG. 3A) based on first setting values. For example, the first setting values may include a first exposure value determined based on a first sensitivity value, a first aperture value, and a first shutter speed value, a first color space, and a first white balance value.

According to an embodiment, the electronic device 301 may analyze the preview image 410 to determine second setting values that are at least partially different from the first setting values. For example, the electronic device 301 may determine second setting values including a second sensitivity value different from the first sensitivity value and a second color space different from the first color space.

According to an embodiment, the electronic device 301 may determine a number of at least one additional image for enhancing brightness or saturation of a first image to be captured of the first object based on the first setting values.

According to an embodiment, the electronic device 301 may determine the number of the at least one additional image as two.

According to an embodiment, the electronic device 301 may obtain the first image 410 captured based on the first setting values.

According to an embodiment, the electronic device 301 may obtain an image 420 captured based on a setting value in which the first sensitivity value is changed to the second sensitivity value and an image 430 captured based on a setting value in which the first color space is changed to the second color space.

According to an embodiment, the electronic device 301 may obtain an image 440 with enhanced brightness and saturation of the first image 410 by overlaying the image 420 captured based on the setting value in which the first sensitivity value is changed to the second sensitivity value and the image 430 captured based on the setting value in which the first color space is changed to the second color space on the first image 410. According to an embodiment, the electronic device 301 may render and obtain the image 440 with enhanced brightness and saturation of the first image 410 by compositing the first image 410 and the additional images (the image 420 captured based on the setting value in which the first sensitivity value is changed to the second sensitivity value, the image 430 captured based on the setting value in which the first color space is changed to the second color space) or by adding the additional images on the first image 410 using the first image 410 as a base image. Accordingly, the electronic device 301 according to an embodiment may provide the user with an effect as if the image 440 with enhanced brightness and saturation of the first image 410 is a high dynamic range (HDR) image.

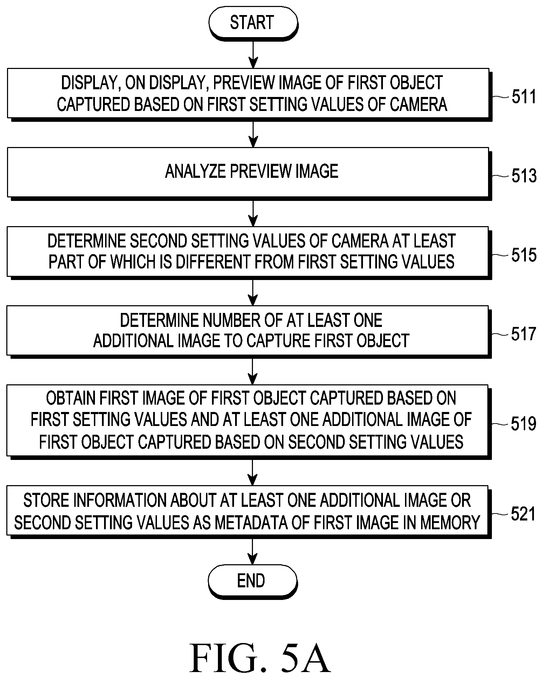

FIG. 5A is a flowchart illustrating an operation of the electronic device obtaining a first image and at least one additional image according to an embodiment.

Referring to FIG. 5A, according to an embodiment, in operation 511, the electronic device 301 (e.g., the electronic device 301 of FIG. 3A) may display a preview image of a first object captured through the camera 310 (e.g., the camera 310 of FIG. 3A) based on first setting values of the camera 310 on the display 360 (e.g., the display 360 of FIG. 3A). For example, the first object may include a subject, a landscape, or an object. According to an embodiment, the first setting values may include at least one of a first exposure value, a first color space, or a first white balance value of the camera 310. For example, the first exposure value may be determined based on a first shutter speed value, a first sensitivity value, and a first aperture value. For example, the first color space may include DCI-P3, Adobe RGB, sRGB, Rec. 709, or Rec. 2020. However, this is an example, and the first setting values may not be limited to the example.

According to an embodiment, in operation 513, the electronic device 301 may analyze the preview image. According to an embodiment, the electronic device 301 may analyze the preview image to identify the first setting values of the preview image.

According to an embodiment, the electronic device 301 may analyze the preview image to identify a histogram representing brightness of the preview image. According to an embodiment, the histogram may include a graph representing the number of pixels corresponding to brightness of an image.

According to an embodiment, the electronic device 301 may analyze the preview image to identify saturation based on a color space of the preview image.

According to an embodiment, in operation 515, the electronic device 301 may determine second setting values of the camera 310 that are at least partially different from the first setting values based on a result of analyzing the preview image.

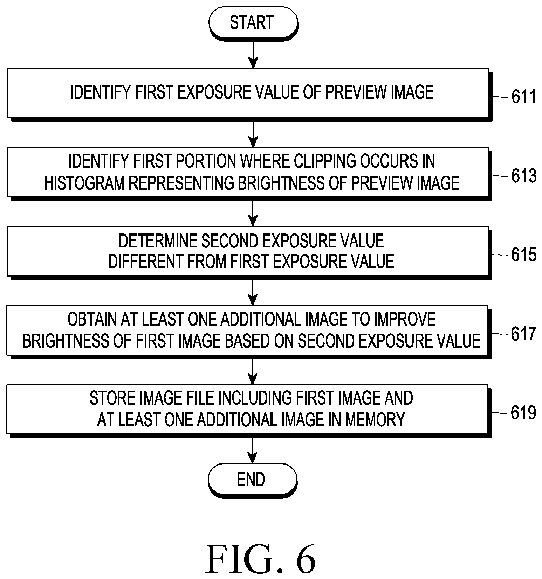

According to an embodiment, the electronic device 301 may determine the second setting values based on the histogram. According to an embodiment, the operation of the electronic device 301 determining the second setting values based on the histogram is specifically described in connection to FIG. 6.

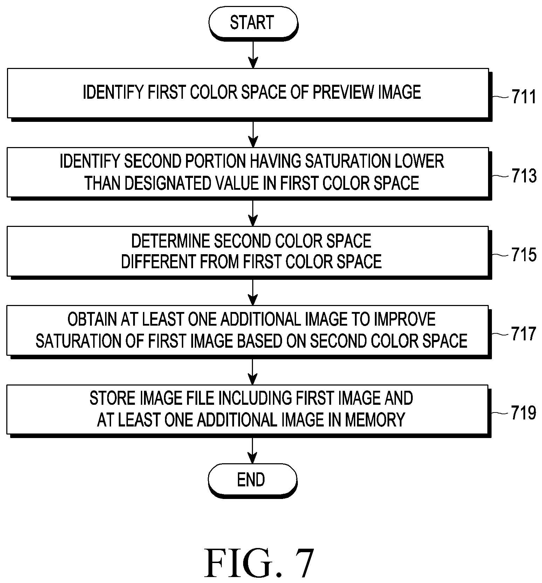

According to an embodiment, the electronic device 301 may determine the second setting values based on the color space. According to an embodiment, the operation of the electronic device 301 determining the second setting values based on the color space is specifically described in connection to FIG. 7.

According to an embodiment, in operation 517, the electronic device 301 may determine a number or type of at least one additional image to capture the first object. For example, the at least one additional image may represent an image for enhancing at least one of brightness or saturation of the first image to be obtained based on the preview image based on the first setting values. The at least one additional image may include a recovery map or a y map. For example, the y map may include a grayscale image representing brightness information of the at least one additional image of the first object captured based on the second setting values.

According to an embodiment, the electronic device 301 may determine the number of the at least one additional image based on the number of changes of the second setting values from the first setting values. According to an embodiment, the electronic device 301 may determine the number of changes of the second setting values from the first setting values as the number of the at least one additional image.

For example, when the electronic device 301 determines the second setting values where only the first color space among the first setting values is changed to the second color space, the electronic device 301 may determine the number of the at least one additional image as one. In this case, the at least one additional image may include an image captured based on the second color space. For example, when the electronic device 301 determines the second setting values where the first color space among the first setting values is changed to the second color space and the first sensitivity value included in the first exposure value is changed to a second sensitivity value, the electronic device 301 may determine the number of the at least one additional image as two. In this case, the at least one additional image may include an image based on the second color space and an image based on the second sensitivity value.

For example, the electronic device 301 may determine the number of the at least one additional image to capture the first object as one based on the second setting values, regardless of the number of changes of the second setting values from the first setting values. For example, when the second setting values are determined as the second exposure value and the second color space, the electronic device 301 may obtain one additional image based on the second exposure value and the second color space.

According to an embodiment, in operation 519, the electronic device 301 may obtain the first image of the first object captured based on the first setting values and the at least one additional image of the first object captured based on the second setting values.

According to an embodiment, in operation 521, the electronic device 301 may store information about the at least one additional image or the second setting values as metadata of the first image in the memory 330 (e.g., the memory 330 of FIG. 3A). According to an embodiment, the electronic device 301 may store an image file including the first image and the at least one additional image in the memory 330. For example, the image file may include JPEG. According to an embodiment, the electronic device 301 may store information about the first setting values as metadata of the first image.

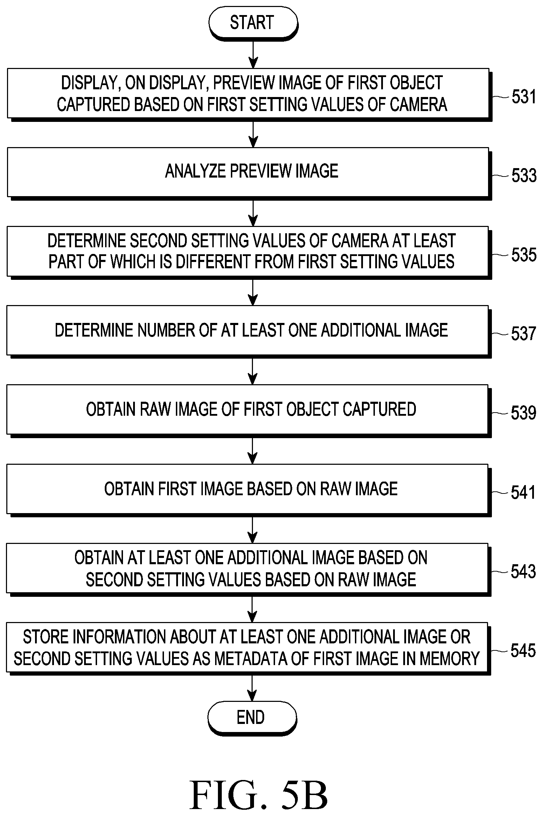

FIG. 5B is a flowchart illustrating an operation of the electronic device obtaining a first image and at least one additional image according to an embodiment.

Referring to FIG. 5B, according to an embodiment, in operation 531, the electronic device 301 (e.g., the electronic device 301 of FIG. 3A) may display a preview image of a first object captured through the camera 310 (e.g., the camera 310 of FIG. 3A) based on first setting values of the camera 310 on the display 360 (e.g., the display 360 of FIG. 3A). According to an embodiment, the first setting values may include at least one of a first exposure value, a first color space, or a first white balance value of the camera 310.

According to an embodiment, in operation 533, the electronic device 301 may analyze the preview image. According to an embodiment, the electronic device 301 may analyze the preview image to identify the first setting values of the preview image.

According to an embodiment, the electronic device 301 may analyze the preview image to identify a histogram representing brightness of the preview image. According to an embodiment, the electronic device 301 may analyze the preview image to identify saturation based on a color space of the preview image.

According to an embodiment, in operation 535, the electronic device 301 may determine second setting values of the camera 310 that are at least partially different from the first setting values based on a result of analyzing the preview image.

According to an embodiment, in operation 537, the electronic device 301 may determine a number or type of at least one additional image to capture the first object.

According to an embodiment, in operation 539, the electronic device 301 may obtain a raw image of the first object captured. According to an embodiment, the raw image may represent data not processed by an image sensor (e.g., the image sensor 230 of FIG. 2).

According to an embodiment, the first setting values of the camera 310 identified at the time when the raw image is captured may be stored as metadata of the raw image in the memory 330 (e.g., the memory 330 of FIG. 3A).

According to an embodiment, in operation 541, the electronic device 301 may obtain the first image based on the first setting values based on the raw image. According to an embodiment, the electronic device 301 may develop and obtain the first image based on the first setting values of the camera 310 identified at the time when the raw image is captured using (e.g., reading) the raw image stored in the memory 330.

According to an embodiment, in operation 543, the electronic device 301 may obtain at least one additional image based on the second setting values based on the raw image. According to an embodiment, the electronic device 301 may develop and obtain the at least one additional image based on the second setting values using the raw image. According to an embodiment, the operation of the electronic device 301 developing the raw image may include obtaining an image based on adjusted setting values by adjusting the first setting values of the camera 310 identified at the time when the raw image stored in the memory 330 was captured. According to an embodiment, after obtaining the first image and the at least one additional image, the processor 320 may delete the raw image stored in the memory 330.

According to an embodiment, in operation 545, the electronic device 301 may store information about the at least one additional image or the second setting values as metadata of the first image in the memory 330. According to an embodiment, the electronic device 301 may store an image file including the first image and the at least one additional image in the memory 330. For example, the image file may include JPEG. According to an embodiment, the electronic device 301 may store information about the first setting values as metadata of the first image. For example, the image file may include JPEG or JPG. According to an embodiment, a bit depth of the image file including the first image and the at least one additional image may be less than a bit depth of the image file of the raw image.

FIG. 6 is a flowchart illustrating an operation of the electronic device obtaining at least one additional image based on a second exposure value different from a first exposure value of a preview image according to an embodiment.

Referring to FIG. 6, according to an embodiment, in operation 611, the electronic device 301 (e.g., the electronic device 301 of FIG. 3A) may analyze a preview image of a first object captured to identify the first exposure value of the preview image. For example, the first exposure value may include a first shutter speed value, a first sensitivity value, and a first aperture value.

According to an embodiment, in operation 613, the electronic device 301 may identify a first portion where clipping occurs in a histogram representing brightness of the preview image. For example, the first portion may include a portion where white clipping occurs or a portion where black clipping occurs. According to an embodiment, the histogram may include a graph representing the number of pixels corresponding to brightness of an image.

According to an embodiment, the histogram may include a first histogram associated with a red (R) channel of the preview image, a second histogram associated with a green (G) channel, or a third histogram associated with a blue (B) channel. According to an embodiment, the histogram may also include a fourth histogram obtained by combining the first histogram, the second histogram, and the third histogram.

According to an embodiment, in operation 615, based on identifying the first portion, the electronic device 301 may determine a second exposure value different from the first exposure value. According to an embodiment, the electronic device 301 may determine the second exposure value so that clipping does not occur in the first portion. According to an embodiment, the second exposure value may include a value in which at least one of the first shutter speed value, the first sensitivity value, or the first aperture value is changed.

For example, when the number of pixels corresponding to a specified first brightness representing the first portion of the histogram is greater than a specified first value, the electronic device 301 may identify that white clipping occurs in the first portion. For example, when the electronic device 301 identifies that white clipping occurs in the first portion, the electronic device 301 may determine the second exposure value to be less than the first exposure value.

For example, when the number of pixels corresponding to a specified second brightness less than the specified first brightness representing the first portion of the histogram is greater than the specified first value, the electronic device 301 may identify that black clipping occurs in the first portion. For example, when the electronic device 301 identifies that black clipping occurs in the first portion, the electronic device 301 may determine the second exposure value to be greater than the first exposure value.

According to an embodiment, in operation 617, based on the second exposure value, the electronic device 301 may obtain at least one additional image for enhancing brightness of the first image. According to an embodiment, the at least one additional image may include an image for enhancing brightness for the first portion in the histogram representing the brightness of the first image. For example, the histogram representing the brightness of the first image may be the same as the histogram representing the brightness of the preview image. According to an embodiment, the at least one additional image may include an image for preventing clipping from occurring in the first portion of the histogram representing the brightness of the first image.

For example, the at least one additional image for enhancing the brightness of the first image may include a singular or plural images. For example, the electronic device 301 may obtain at least one additional image among an image in which only the first sensitivity value among the first setting values is changed, an image in which only the first aperture value among the first setting values is changed, or an image in which only the first shutter speed value among the first setting values is changed. For example, the electronic device 301 may obtain one image in which at least one of the first sensitivity value, the first aperture value, or the first shutter speed value among the first setting values is changed. This is an example, and the number of the at least one additional image may be determined in various ways.

According to an embodiment, in operation 619, the electronic device 301 may store an image file including the first image and the at least one additional image in the memory 330 (e.g., the memory 330 of FIG. 3A). According to an embodiment, the at least one additional image may be stored as metadata of the first image. In this case, according to an embodiment, the electronic device 301 may store information about the first exposure value of the first image and information about the second exposure value of the at least one additional image as metadata of the first image.

FIG. 7 is a flowchart illustrating an operation of an electronic device obtaining at least one additional image based on a second color space different from a first color space of a preview image according to an embodiment.

Referring to FIG. 7, according to an embodiment, in operation 711, the electronic device 301 (e.g., the electronic device 301 of FIG. 3A) may analyze a preview image of a first object captured to identify the first color space of the preview image. For example, the first color space may include DCI-P3, Adobe RGB, sRGB, Rec. 709, Rec. 2020, or CG318-4K.

According to an embodiment, in operation 713, the electronic device 301 may identify a second portion having saturation lower than a specified value in the first color space. According to an embodiment, the electronic device 301 may identify the second portion based on color saturation identified in the first color space. According to an embodiment, when color saturation is greater than a specified third value, the electronic device 301 may determine that the second portion having saturation lower than the specified value has been identified. For example, the specified third value may represent a value identified to exceed a color range that may be represented in the first color space.

According to an embodiment, in operation 715, based on identifying the second portion having saturation lower than the specified value in the first color space, the electronic device 301 may determine a second color space different from the first color space. For example, the second color space may include DCI-P3, Adobe RGB, sRGB, Rec. 709, Rec. 2020, or CG318-4K. For example, the second color space may include a color space capable of representing a wider range of colors than the first color space.

According to an embodiment, in operation 717, based on the second color space, the electronic device 301 may obtain at least one additional image for enhancing saturation of the first image.

According to an embodiment, in operation 719, the electronic device 301 may store an image file including the first image and the at least one additional image in the memory 330 (e.g., the memory 330 of FIG. 3A). According to an embodiment, the at least one additional image may be stored as metadata of the first image. In this case, according to an embodiment, the electronic device 301 may store information about the first color space and information about the second color space as metadata of the first image.

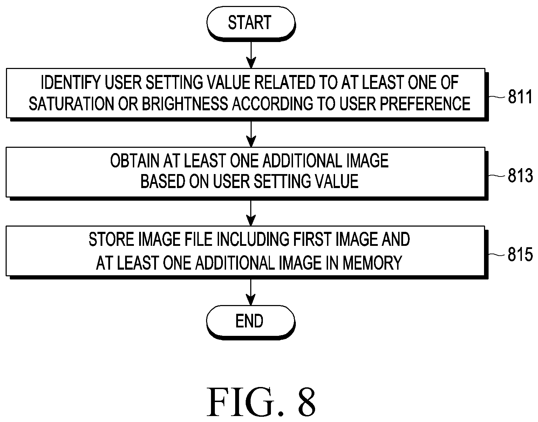

For convenience of description, although FIGS. 7 and 8 have been separately illustrated and described, the operations described in connection to FIG. 7 and the operations described in connection to FIG. 8 may be performed independently or simultaneously.

FIG. 8 is a flowchart illustrating an operation of an electronic device obtaining at least one additional image based on a user setting value related to at least one of saturation or brightness according to user preference according to an embodiment.

Referring to FIG. 8, according to an embodiment, in operation 811, the electronic device 301 (e.g., the electronic device 301 of FIG. 3A) may identify a user setting value related to at least one of saturation or brightness according to user preference. According to an embodiment, the electronic device 301 may identify a user input for user preference. The electronic device 301 may identify a setting value of the camera 310 including at least one of an exposure value, a color space, or a white balance value corresponding to the user preference based on the user input. Each of the setting values of the camera 310 for each of the exposure value, color space, and white balance value corresponding to the user preference may be pre-stored in the memory 330.

According to an embodiment, in operation 813, the electronic device 301 may obtain at least one additional image based on the user setting value. According to an embodiment, the electronic device 301 may obtain the at least one additional image based on the setting values of the camera 310 for each of the exposure value, color space, and white balance value corresponding to the user preference.

According to an embodiment, in operation 815, the electronic device 301 may store an image file including the first image and the at least one additional image in the memory 330 (e.g., the memory 330 of FIG. 3A). According to an embodiment, the electronic device 301 may store the at least one additional image as meta information of the first image.

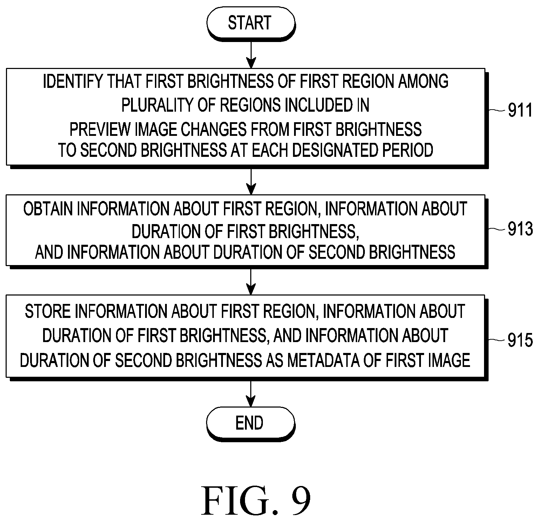

FIG. 9 is a flowchart illustrating an operation of an electronic device storing information about at least one region included in a preview image as meta information of a first image according to an embodiment.

Referring to FIG. 9, according to an embodiment, in operation 911, the electronic device 301 (e.g., the electronic device 301 of FIG. 3A) may analyze a preview image of a first object captured to identify that a first brightness of a first region among a plurality of regions included in the preview image changes from the first brightness to a second brightness at each specified period.

According to an embodiment, in operation 913, the electronic device 301 may obtain information about the first region, information about the first brightness, information about a duration of the first brightness, information about the second brightness, and information about a duration of the second brightness.

According to an embodiment, in operation 915, the electronic device 301 may store the information about the first region, the information about the first brightness, the information about the duration of the first brightness, the information about the second brightness, and the information about the duration of the second brightness as metadata of the first image in the memory 330 (e.g., the memory 330 of FIG. 3A).

FIG. 10A is a view illustrating an operation of the electronic device obtaining at least one additional image to enhance brightness when a clipped portion is identified in a histogram representing brightness of a first image according to an embodiment.

Referring to (a) of FIG. 10A, according to an embodiment, the electronic device 301 (e.g., the electronic device 301 of FIG. 3A) may obtain a preview image of a first object captured based on first setting values of the camera 310 through the camera 310 (e.g., the camera 310 of FIG. 3A). For example, the first setting values may include a first exposure value. For example, the first exposure value may be determined based on a first shutter speed value, a first sensitivity value, and a first aperture value. For example, the first object may include a subject, a building, or a landscape.

According to an embodiment, the electronic device 301 may analyze the preview image to obtain a histogram 1011, 1012 representing brightness of the preview image. For example, the histogram 1011, 1012 may include a graph representing the number of pixels corresponding to brightness of the preview image.

According to an embodiment, when the number of pixels corresponding to brightness representing the first portion 1012 of the histogram 1011, 1012 is greater than a specified first value, the electronic device 301 may identify that white clipping occurs in the first portion 1012. According to an embodiment, the electronic device 301 may identify that the first portion 1012 of the histogram 1011, 1012 representing the brightness of the preview image has been clipped (e.g., white clipped).

According to an embodiment, the electronic device 301 may determine setting values of the camera 310 to capture at least one additional image for enhancing brightness for the first portion 1012. For example, when the electronic device 301 identifies that white clipping occurs in the first portion, the electronic device 301 may determine an exposure value darker than the first exposure value. For example, the electronic device 301 may determine an exposure value darker than the first exposure value by changing at least part of the first shutter speed value, the first sensitivity value, or the first aperture value.

Referring to (b) of FIG. 10A, according to an embodiment, the electronic device 301 may obtain at least one additional image of the first object captured based on second setting values of the camera 310 and the first image based on the first setting values through the camera 310.

According to an embodiment, the electronic device 301 may store the first image and the at least one additional image as a single image file. According to an embodiment, the at least one additional image may be stored as metadata of the first image.

According to an embodiment, the electronic device 301 may overlay the at least one additional image on the first image. According to an embodiment, the electronic device 301 may render and obtain an image with enhanced brightness or saturation of the first image by compositing the first image and the at least one additional image or by adding the at least one additional image on the first image using the first image as a base image.

Accordingly, the histogram 1013 representing the brightness of the image in which the at least one additional image is overlaid on the first image may have no clipped (e.g., white clipped) portion.

FIG. 10B is a view illustrating an operation of the electronic device obtaining at least one additional image to enhance brightness when a clipped portion is identified in a histogram representing brightness of a first image according to an embodiment.

Referring to (a) of FIG. 10B, according to an embodiment, the electronic device 301 (e.g., the electronic device 301 of FIG. 3A) may obtain a preview image of a first object captured based on first setting values of the camera 310 through the camera 310 (e.g., the camera 310 of FIG. 3A). For example, the first setting values may be determined based on a first shutter speed value, a first sensitivity value, and a first aperture value. For example, the first object may include a subject, a building, or a landscape.

According to an embodiment, the electronic device 301 may analyze the preview image to obtain a histogram 1021, 1022 representing brightness of the preview image. For example, the histogram 1021, 1022 may include a graph representing the number of pixels corresponding to brightness of the preview image.

According to an embodiment, the electronic device 301 may identify that the second portion 1022 of the histogram 1021, 1022 representing the brightness of the preview image has been clipped (e.g., black clipped). For example, when the number of pixels corresponding to brightness representing the second portion 1022 of the histogram is greater than a specified second value, the electronic device 301 may identify that black clipping occurs in the second portion 1022. For example, when the electronic device 301 identifies that black clipping occurs in the second portion 1022, the electronic device 301 may determine an exposure value brighter than the first exposure value.

According to an embodiment, the electronic device 301 may determine setting values of the camera 310 to capture at least one additional image for enhancing brightness for the second portion 1022. For example, the electronic device 301 may determine an exposure value brighter than the first exposure value by changing at least part of the first shutter speed value, the first sensitivity value, or the first aperture value.

Referring to (b) of FIG. 10B, according to an embodiment, the electronic device 301 may obtain at least one additional image of the first object captured based on an exposure value brighter than the first exposure value and the first image through the camera 310.

According to an embodiment, the electronic device 301 may store the first image and the at least one additional image as a single image file. According to an embodiment, the at least one additional image may be stored as metadata of the first image.

According to an embodiment, the electronic device 301 may overlay the at least one additional image on the first image. According to an embodiment, the electronic device 301 may render and obtain an image with enhanced brightness or saturation of the first image by compositing the first image and the at least one additional image or by adding the at least one additional image on the first image using the first image as a base image.

Accordingly, the histogram 1023 representing the brightness of the image in which the at least one additional image is overlaid on the first image may have no clipped (e.g., black clipped) portion.

FIG. 10C is a view illustrating an operation of an electronic device obtaining at least one additional image to enhance brightness when a clipped portion is identified in histograms of each of a plurality of channels representing brightness of a first image according to an embodiment.

Referring to (a), (b), and (c) of FIG. 10C, according to an embodiment, the electronic device 301 (e.g., the electronic device 301 of FIG. 3A) may obtain a preview image of a first object captured based on first setting values of the camera 310 through the camera 310 (e.g., the camera 310 of FIG. 3A). For example, the first setting values may be determined based on a first shutter speed value, a first sensitivity value, and a first aperture value. For example, the first object may include a subject, a building, or a landscape.

According to an embodiment, the electronic device 301 may analyze the preview image to obtain histograms 1031, 1041, 1051 representing brightness of the preview image. For example, the histograms 1031, 1041, 1051 may include graphs representing the number of pixels corresponding to brightness of the preview image. For example, the histograms may include histograms associated with a plurality of channels (e.g., red (R) channel, green (G) channel, blue (B) channel) of the camera 310.

According to an embodiment, the electronic device 301 may identify that white clipping occurs in a portion 1032 of the histogram 1031, 1032 of the R channel representing the brightness of the preview image.

According to an embodiment, the electronic device 301 may determine setting values of the camera 310 to capture at least one additional image for enhancing brightness for the portion 1032. For example, when the electronic device 301 identifies that white clipping occurs in the portion 1032 of the histogram 1031, 1032 of the R channel, the electronic device 301 may determine an exposure value darker than the first exposure value.

Referring to (b) of FIG. 10C, according to an embodiment, the electronic device 301 may identify that a portion 1042 of the histogram 1041, 1042 of the G channel representing the brightness of the preview image has been clipped (e.g., black clipped). For example, when the electronic device 301 identifies that black clipping occurs in the portion 1042 of the histogram 1041, 1042 of the G channel, the electronic device 301 may determine an exposure value brighter than the first exposure value.

Referring to (c) of FIG. 10C, according to an embodiment, the electronic device 301 may identify that a portion 1052 of the histogram 1051, 1052 of the B channel representing the brightness of the preview image has been clipped (e.g., black clipped). For example, when the electronic device 301 identifies that black clipping occurs in the portion 1052 of the histogram 1051, 1052 of the B channel, the electronic device 301 may determine an exposure value brighter than the first exposure value.

According to an embodiment, the electronic device 301 may obtain an additional image based on the determined exposure value.

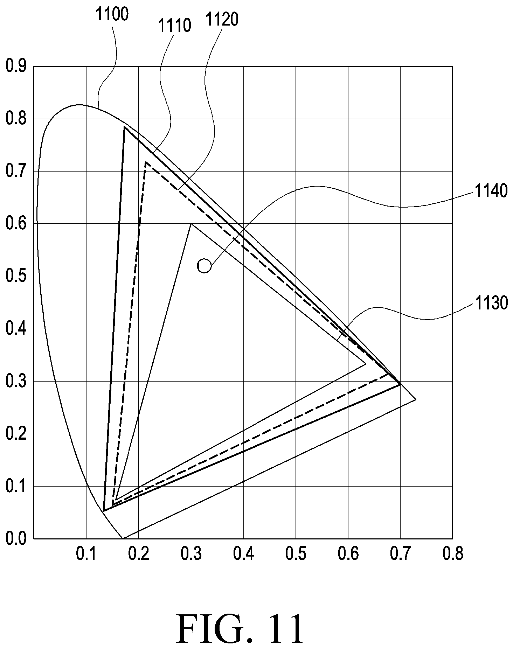

FIG. 11 is a view illustrating an operation of an electronic device obtaining at least one additional image to enhance saturation based on a second color space different from a first color space of a preview image according to an embodiment.

The number and positions of the color spaces 1110, 1120, 1130 illustrated in FIG. 11 may not be limited thereto.

Referring to FIG. 11, the electronic device 301 (e.g., the electronic device 301 of FIG. 3A) may analyze the preview image to identify a color space of the preview image as a first color space 1130.

According to an embodiment, the color spaces 1110, 1120, 1130 may include standard specifications in which colors of pixels of an image are represented in a visible light region 1100. For example, the color space may include DCI-P3, Adobe RGB, sRGB, Rec. 709, or Rec. 2020. However, this is an example, and the color space may include various color spaces. For example, the color space may be determined based on coordinate values in an xy coordinate plane system. The x coordinate may include a coordinate based on a horizontal axis, and the y coordinate may include a coordinate based on a vertical axis.

According to an embodiment, the electronic device 301 may identify a portion having saturation lower than a specified value within the first color space 1130. For example, the electronic device 301 may identify a portion having saturation lower than the specified value within the first color space 1130 based on saturation of pixels of the preview image identified within the first color space 1130. The electronic device 301 may identify positions (coordinates) 1140 of pixels identified within the first color space 1130.

According to an embodiment, when a portion having saturation lower than the specified value is identified within the first color space 1130 based on the positions (coordinates) 1140 of pixels identified within the first color space 1130, the electronic device 301 may change from the first color space 1130 to any one of color spaces 1110, 1120 having a wider color range than the first color space 1130.

According to an embodiment, the electronic device 301 may obtain at least one additional image based on any one of the color spaces 1110, 1120 having a wider color range than the first color space 1130.

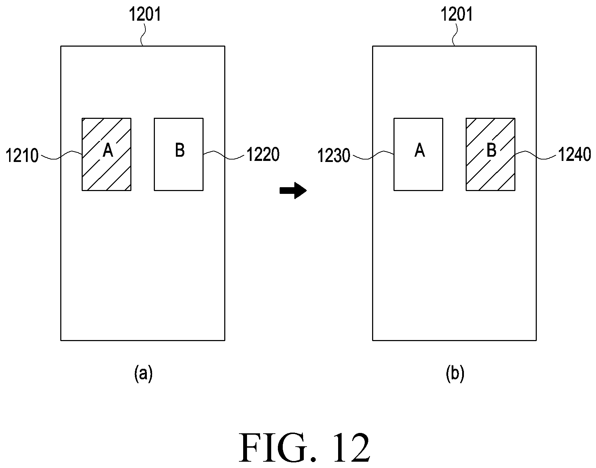

FIG. 12 is a view illustrating an operation of the electronic device identifying information about at least one region among a plurality of regions included in a preview image according to an embodiment.

Referring to (a) of FIG. 12, according to an embodiment, the electronic device 301 (e.g., the electronic device 301 of FIG. 3A) may analyze the preview image. According to an embodiment, the electronic device 301 may obtain information about at least one region included in the preview image 1201.

According to an embodiment, the electronic device 301 may identify that a first region 1210 among a plurality of regions included in the preview image 1201 has a first brightness at a first time. According to an embodiment, the electronic device 301 may identify that a second region 1220 among the plurality of regions has a second brightness at the first time.

Referring to (b) of FIG. 12, according to an embodiment, the electronic device 301 may identify that the first region 1210 among the plurality of regions included in the preview image 1201 changes from the first brightness to the second brightness at a second time after the first time.

According to an embodiment, the electronic device 301 may identify that the second region 1220 among the plurality of regions included in the preview image 1201 changes from the second brightness to the first brightness at the second time.

According to an embodiment, the electronic device 301 may obtain information about the first region 1210, information about the first brightness for the first region 1210, information about a duration of the first brightness for the first region 1210, information about the second brightness for the first region 1210, and information about a duration of the second brightness for the first region 1210, and store them as metadata of the first image.

According to an embodiment, the electronic device 301 may obtain information about the second region 1220, information about the first brightness for the second region 1220, information about a duration of the first brightness for the second region 1220, information about the second brightness for the second region 1220, and information about a duration of the second brightness for the second region 1220, and store them as metadata of the first image.

According to an embodiment, an electronic device may include a display, a camera, and a processor.

According to an embodiment, the memory may store instructions that, when executed by the processor, cause the electronic device to display, on the display, a preview image of a first object captured through the camera based on first setting values of the camera.

According to an embodiment, the memory may store instructions that, when executed by the processor, cause the electronic device to determine second setting values of the camera at least part of which is different from the first setting values, by analyzing the preview image.

According to an embodiment, the memory may store instructions that, when executed by the processor, cause the electronic device to determine, based on the second setting values, a type or number of at least one additional image to capture the first object.

According to an embodiment, the memory may store instructions that, when executed by the processor, cause the electronic device to obtain, through the camera, an image of the first object captured based on the first setting values and the at least one additional image of the first object captured based on the second setting values and the type or the number.

According to an embodiment, the memory may store instructions that, when executed by the processor, cause the electronic device to store, in the memory, the at least one additional image as metadata of the image.

According to an embodiment, the memory may store instructions that, when executed by the processor, cause the electronic device to identify a first portion where clipping occurs in a histogram representing brightness of the preview image.

According to an embodiment, the memory may store instructions that, when executed by the processor, cause the electronic device to obtain, based on identifying the first portion, the at least one additional image to enhance the brightness of the image.

According to an embodiment, the memory may store instructions that, when executed by the processor, cause the electronic device to identify, based on the histogram, a first exposure value of the preview image. The first exposure value may be identified based on a first shutter speed value, a first sensitivity value, and a first aperture value.

According to an embodiment, the memory may store instructions that, when executed by the processor, cause the electronic device to determine a second exposure value different from the first exposure value by changing at least one of the first shutter speed value, the first sensitivity value, or the first aperture value.

According to an embodiment, the memory may store instructions that, when executed by the processor, cause the electronic device to obtain, based on the second exposure value, the at least one additional image.

According to an embodiment, the histogram may include at least one of a first histogram associated with a red (R) channel of the preview image, a second histogram associated with a green (G) channel, a third histogram associated with a blue (B) channel, or a fourth histogram obtained by combining the first histogram, the second histogram, and the third histogram.

According to an embodiment, the memory may store instructions that, when executed by the processor, cause the electronic device to obtain, based on a first color space of the preview image, the at least one additional image to enhance saturation of the image.

According to an embodiment, the memory may store instructions that, when executed by the processor, cause the electronic device to identify a second portion having saturation lower than a specified value in the first color space.

According to an embodiment, the memory may store instructions that, when executed by the processor, cause the electronic device to change from the first color space to a second color space different from the first color space to enhance the saturation of the second portion.

According to an embodiment, the memory may store instructions that, when executed by the processor, cause the electronic device to obtain, based on the second color space, the at least one additional image.

According to an embodiment, the memory may store instructions that, when executed by the processor, cause the electronic device to identify a user setting value related to at least one of saturation or brightness according to user preference.

According to an embodiment, the memory may store instructions that, when executed by the processor, cause the electronic device to obtain the at least one additional image by further considering the user setting value.

According to an embodiment, the memory may store instructions that, when executed by the processor, cause the electronic device to store, in the memory, an image file including the image and the at least one additional image.

According to an embodiment, the memory may store instructions that, when executed by the processor, cause the electronic device to store, as the metadata of the image, information about the first region, a duration of the first brightness, and a duration of the second brightness when it is identified that brightness of a first region among a plurality of regions included in the preview image changes from a first brightness to a second brightness at each specified period.

According to an embodiment, a method of operating an electronic device may include displaying, on a display included in the electronic device, a preview image of a first object captured through a camera included in the electronic device based on first setting values of the camera.

According to an embodiment, the method of operating the electronic device may include determining second setting values of the camera at least part of which is different from the first setting values, by analyzing the preview image.

According to an embodiment, the method of operating the electronic device may include determining, based on the second setting values, a number or type of at least one additional image to capture the first object.

According to an embodiment, the method of operating the electronic device may include obtaining, through the camera, an image of the first object captured based on the first setting values and the at least one additional image of the first object captured based on the second setting values and the type or the number.

According to an embodiment, the method of operating the electronic device may include storing, in the memory, information about the at least one additional image or the second setting values as metadata of the image.

According to an embodiment, the method of operating the electronic device may include identifying a first portion where clipping occurs in a histogram representing brightness of the preview image.

According to an embodiment, the method of operating the electronic device may include obtaining, based on identifying the first portion, the at least one additional image to enhance the brightness of the image.

According to an embodiment, the method of operating the electronic device may include identifying, based on the histogram, a first exposure value of the preview image. The first exposure value may be identified based on a first shutter speed value, a first sensitivity value, and a first aperture value.

According to an embodiment, the method of operating the electronic device may include determining a second exposure value different from the first exposure value by changing at least one of the first shutter speed value, the first sensitivity value, or the first aperture value.

According to an embodiment, the method of operating the electronic device may include obtaining, based on the second exposure value, the at least one additional image.

According to an embodiment, the method of operating the electronic device may include obtaining, based on a first color space of the preview image, the at least one additional image to enhance saturation of the image.

According to an embodiment, the method of operating the electronic device may include identifying a second portion having saturation lower than a specified value in the first color space.

According to an embodiment, the method of operating the electronic device may include changing from the first color space to a second color space different from the first color space to enhance the saturation of the second portion.

According to an embodiment, the method of operating the electronic device may include obtaining, based on the second color space, the at least one additional image.

According to an embodiment, the method of operating the electronic device may include identifying a user setting value related to at least one of saturation or brightness according to user preference.

According to an embodiment, the method of operating the electronic device may include obtaining the at least one additional image by further considering the user setting value.

According to an embodiment, the method of operating the electronic device may include obtaining, through the camera, a raw image captured based on the first setting values, obtaining the image using the raw image, and obtaining the at least one additional image using the raw image. According to an embodiment, the method of operating the electronic device may include storing, as the metadata of the image, information about the first region, a duration of the first brightness, and a duration of the second brightness when it is identified that brightness of a first region among a plurality of regions included in the preview image changes from a first brightness to a second brightness at each specified period.

According to an embodiment, the method of operating the electronic device may include storing, in the memory, an image file including the image and the at least one additional image.

According to an embodiment, in a storage medium storing computer-readable instructions, the instructions, when executed by a processor of an electronic device, cause the electronic device to perform at least one operation. The at least one operation may include displaying, on a display included in the electronic device, a preview image of a first object captured through a camera included in the electronic device based on first setting values of the camera.

According to an embodiment, in a storage medium storing computer-readable instructions, the instructions, when executed by a processor of an electronic device, cause the electronic device to perform at least one operation. The at least one operation may include determining second setting values of the camera at least part of which is different from the first setting values, by analyzing the preview image.

According to an embodiment, in a storage medium storing computer-readable instructions, the instructions, when executed by a processor of an electronic device, cause the electronic device to perform at least one operation. The at least one operation may include determining, based on the second setting values, a number of at least one additional image to capture the first object.

According to an embodiment, in a storage medium storing computer-readable instructions, the instructions, when executed by a processor of an electronic device, cause the electronic device to perform at least one operation. The at least one operation may include obtaining, through the camera, an image of the first object captured based on the first setting values and the at least one additional image of the first object captured based on the second setting values and the type or the number.

According to an embodiment, in a storage medium storing computer-readable instructions, the instructions, when executed by a processor of an electronic device, cause the electronic device to perform at least one operation. The at least one operation may include storing, in memory included in the electronic device, the at least one additional image as metadata of the image.

According to an embodiment, in a storage medium storing computer-readable instructions, the instructions, when executed by a processor of an electronic device, cause the electronic device to perform at least one operation. The at least one operation may include identifying a first portion where clipping occurs in a histogram representing brightness of the preview image.

According to an embodiment, in a storage medium storing computer-readable instructions, the instructions, when executed by a processor of an electronic device, cause the electronic device to perform at least one operation. The at least one operation may include obtaining, based on identifying the first portion, the at least one additional image to enhance the brightness of the image.

According to an embodiment, in a storage medium storing computer-readable instructions, the instructions, when executed by a processor of an electronic device, cause the electronic device to perform at least one operation. The at least one operation may include identifying, based on the histogram, a first exposure value of the preview image. The first exposure value may be identified based on a first shutter speed value, a first sensitivity value, and a first aperture value.

According to an embodiment, in a storage medium storing computer-readable instructions, the instructions, when executed by a processor of an electronic device, cause the electronic device to perform at least one operation. The at least one operation may include determining a second exposure value different from the first exposure value by changing at least one of the first shutter speed value, the first sensitivity value, or the first aperture value.

According to an embodiment, in a storage medium storing computer-readable instructions, the instructions, when executed by a processor of an electronic device, cause the electronic device to perform at least one operation. The at least one operation may include obtaining, based on the second exposure value, the at least one additional image.

According to an embodiment, in a storage medium storing computer-readable instructions, the instructions, when executed by a processor of an electronic device, cause the electronic device to perform at least one operation. The at least one operation may include obtaining, based on a first color space of the preview image, the at least one additional image to enhance saturation of the first image.

According to an embodiment, in a storage medium storing computer-readable instructions, the instructions, when executed by a processor of an electronic device, cause the electronic device to perform at least one operation. The at least one operation may include identifying a second portion having saturation lower than a specified value in the first color space.

According to an embodiment, in a storage medium storing computer-readable instructions, the instructions, when executed by a processor of an electronic device, cause the electronic device to perform at least one operation. The at least one operation may include changing from the first color space to a second color space different from the first color space to enhance the saturation of the second portion.

According to an embodiment, in a storage medium storing computer-readable instructions, the instructions, when executed by a processor of an electronic device, cause the electronic device to perform at least one operation. The at least one operation may include obtaining, based on the second color space, the at least one additional image.

According to an embodiment, in a storage medium storing computer-readable instructions, the instructions, when executed by a processor of an electronic device, cause the electronic device to perform at least one operation. The at least one operation may include obtaining, through the camera, a raw image captured based on the first setting values, obtaining the image using the raw image, and obtaining the at least one additional image using the raw image.

According to an embodiment, in a storage medium storing computer-readable instructions, the instructions, when executed by a processor of an electronic device, cause the electronic device to perform at least one operation. The at least one operation may include identifying a user setting value related to at least one of saturation or brightness according to user preference.

According to an embodiment, in a storage medium storing computer-readable instructions, the instructions, when executed by a processor of an electronic device, cause the electronic device to perform at least one operation. The at least one operation may include obtaining the at least one additional image by further considering the user setting value.

According to an embodiment, in a storage medium storing computer-readable instructions, the instructions, when executed by a processor of an electronic device, cause the electronic device to perform at least one operation. The at least one operation may include storing, in the memory, an image file including the first image and the at least one additional image.

According to an embodiment, in a storage medium storing computer-readable instructions, the instructions, when executed by a processor of an electronic device, cause the electronic device to perform at least one operation. The at least one operation may include storing, as the metadata of the image, information about the first region, a duration of the first brightness, and a duration of the second brightness when it is identified that brightness of a first region among a plurality of regions included in the preview image changes from a first brightness to a second brightness at each specified period.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to the above-listed embodiments.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 or 301). For example, a processor (e.g., the processor 120 or 320) of the machine (e.g., the electronic device 101 or 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (301) comprising:
a display (360);
memory (330) configured to store instructions;
a camera (310); and
a processor (320), wherein the instructions, when executed by the processor, cause the electronic device to:
display, on the display, a preview image of a first object captured through the camera based on first setting values of the camera;
determine second setting values of the camera at least part of which is different from the first setting values, by analyzing the preview image;
determine, based on the second setting values, a type and number of at least one additional image to capture the first object;
obtain, through the camera, an image of the first object captured based on the first setting values and the at least one additional image of the first object captured based on the second setting values and the type or the number; and
store, in the memory, information about the at least one additional image or the second setting values as metadata of the image.

2. The electronic device of claim 1, wherein the instructions, when executed by the processor, cause the electronic device to:
identify a first portion, in which clipping occurs, in a histogram representing brightness of the preview image; and
based on identifying the first portion, obtain the at least one additional image to improve the brightness of the image.

3. The electronic device according to claim 1 or 2, wherein the instructions, when executed by the processor, cause the electronic device to:
based on the histogram, identify a first exposure value of the preview image, wherein the first exposure value is identified based on a first shutter speed value, a first sensitivity value, and a first aperture value;
determine a second exposure value different from the first exposure value by changing at least one of the first shutter speed value, the first sensitivity value, or the first aperture value; and
based on the second exposure value, obtain the at least one additional image.

4. The electronic device according to any one of claims 1 to 3, wherein the histogram comprises at least one of:
a first histogram associated with a red (R) channel of the preview image;
a second histogram associated with a green (G) channel of the preview image;
a third histogram associated with a blue (B) channel of the preview image; or
a fourth histogram obtained by combining the first, second, and third histograms.

5. The electronic device according to any one of claims 1 to 4, wherein the instructions, when executed by the processor, cause the electronic device to:
based on a first color space of the preview image, obtain the at least one additional image to improve saturation of the image.

6. The electronic device according to any one of claims 1 to 5, wherein the instructions, when executed by the processor, cause the electronic device to:
identify a second portion having saturation lower than a specified value in the first color space;
change the first color space to a second color space different from the first color space to improve the saturation of the second portion; and
based on the second color space, obtain the at least one additional image.

7. The electronic device according to any one of claims 1 to 6, wherein the instructions, when executed by the processor, cause the electronic device to:
obtain a raw image captured through the camera based on the first setting values;
obtain the image using the raw image; and
obtain the at least one additional image using the raw image.

8. The electronic device according to any one of claims 1 to 7, wherein the instructions, when executed by the processor, cause the electronic device to:
identify a user setting value related to at least one of saturation or brightness according to a user's preference; and
obtain the at least one additional image by further considering the user setting value.

9. The electronic device according to any one of claims 1 to 8, wherein the instructions, when executed by the processor, cause the electronic device to:
store, in the memory, an image file including the image or the at least one additional image.

10. The electronic device according to any one of claims 1 to 9, wherein the instructions, when executed by the processor, cause the electronic device to:
when it is identified that brightness of a first region among a plurality of regions included in the preview image changes from a first brightness to a second brightness at each specified interval, store, as the metadata of the image, information regarding the first region, a duration of the first brightness, and a duration of the second brightness.

11. A method of operating an electronic device (301), the method comprising:
displaying, on a display (360) included in the electronic device, a preview image of a first object captured through a camera (310) included in the electronic device based on first setting values of the camera;
determining second setting values of the camera at least part of which is different from the first setting values, by analyzing the preview image;
determining, based on the second setting values, a type or number of at least one additional image to capture the first object;
obtaining, through the camera, an image of the first object captured based on the first setting values and the at least one additional image of the first object captured based on the second setting values and the type or the number; and
storing, in memory (330) included in the electronic device, information about the at least one additional image or the second setting values as metadata of the first image.

12. The method of claim 11, further comprising:
identifying a first portion, in which clipping occurs, in a histogram representing brightness of the preview image; and
based on identifying the first portion, obtaining the at least one additional image to enhance the brightness of the image.

13. The method according to any one of claims 11 to 12, further comprising:
based on the histogram, identifying a first exposure value of the preview image, wherein the first exposure value is identified based on a first shutter speed value, a first sensitivity value, and a first aperture value;
determining a second exposure value different from the first exposure value by changing at least one of the first shutter speed value, the first sensitivity value, or the first aperture value; and
based on the second exposure value, obtaining the at least one additional image.

14. The method according to any one of claims 11 to 13, wherein the histogram includes at least one of:
a first histogram associated with a red (R) channel of the preview image; a second histogram associated with a green (G) channel of the preview image; a third histogram associated with a blue (B) channel of the preview image; or a fourth histogram obtained by combining the first, second, and third histograms.

15. A storage medium storing computer-readable instructions, wherein the instructions, when executed by a processor (320) of an electronic device (301), cause the electronic device to perform at least one operation, the at least one operation comprising:
displaying, on a display (360) included in the electronic device, a preview image of a first object captured through a camera (310) included in the electronic device based on first setting values of the camera;
determining second setting values of the camera at least part of which is different from the first setting values, by analyzing the preview image;
determining, based on the second setting values, a type or number of at least one additional image to capture the first object;
obtaining, through the camera, a first image of the first object captured based on the first setting values and the at least one additional image of the first object captured based on the second setting values and the number; and
storing, in memory (330) included in the electronic device, information about the at least one additional image or the second setting values as metadata of the first image.
